# EUROPEAN PATENT APPLICATION

(11) **EP 2 099 004 A1**
(43) Date of publication of application: **09.09.2009**
(21) Application number: 09075075.3
(22) Date of filing: 17.02.2009
(51) Int. Cl.: G08B 23/00, A41D 13/00

(54) **Personal protective equipment and managing system thereof**

(30) Priority: 04.03.2008 TW 97107435
(71) Applicant: Liu, Wen-shiang, 106 Taipei City (TW)
(72) Inventor: Liu, Wen-shiang, 106 Taipei City (TW); Hsu, Ya-Ling, 106 Taipei City (TW); Cheng, Gheng-ping, 106 Taipei City (TW); Liu, Li-wen, 106 Taipei City (TW); Chang, Cheng-ping, Taipei City (TW)
(74) Representative: Altenburg, Bernardus Stephanus Franciscus

(57) **Abstract**

A personal protective equipment (1) and managing system thereof are disclosed for providing a user necessary protection in a hazardous environment, which is characterized in that the personal protective equipment can communicate with a reader (2) for calculating a use time of the personal protective equipment in the hazardous environment. A wireless identification element (11) is disposed on a main body. The wireless identification element comprises information therein for the reader to identify, whereby the use time of the personal protective equipment can be calculated.

## Description

### BACKGROUND OF THE INVENTION

### 1. Field of the Invention

The present invention relates to a personal protective equipment and managing system thereof, and more particularly, to a personal protective equipment and a managing system for calculating the use time thereof.

### 2. Description of the Related Art

Generally, working in a hazardous environment requires wearing protective equipment (such as protective suits, protective gloves, a respiratory protective device and so on) so as to let the worker work safely in the hazardous environment (such as the environment having chemical solvents like methylbenzene, xylene and n-Hexane, etc) and to protect the worker's occupational health.

The protective capability of the protective equipment depends on the resistivity of the material of the protective equipment to the toxic substance and different environmental conditions; therefore the use time of the protective equipment varies. Hence, in order to protect the worker, it is crucial to stop using the protective equipment before reaching its safety limit, thus to ensure proper protection of the worker.

Presently there's no certain method or standard regarding to the replacing time, safety limit time, or the lifetime of protective equipment. Usually, the protective equipment is replaced or renewed according to the "Rule of Thumb" or customized rules. In other words, there's no objective measure or statistics in evaluating the effectiveness of the protective equipment. Therefore, it is necessary to provide a personal protective equipment and its managing system which can calculate the accumulated use time and the use history thereof and to further gather environmental data, performance data thereof for the information system to evaluate and analyze, so as to provide effective and necessary protection to the worker who wears the personal protective equipment in the hazardous environment.

### SUMMARY OF THE INVENTION

In view of the above deficiencies, one of the objects of the present invention is to provide a personal protective equipment and its managing system for effectively providing a user necessary and effective protections in the hazardous environment.

It is another object of the present invention to provide a personal protective equipment and its managing system which can accumulate the use time and record the use history of the personal protective equipment, then to provide safety information evaluated and gained by the information system to the user for determining the time to replace or to change his/her personal protective equipment for effective protection.

The present invention discloses a personal protective equipment for providing a user with the necessary protection in a hazardous environment, which is **characterized in that** the personal protective equipment can communicate with a reader, and the personal protective equipment comprises a main body and an identification element. The main body of the personal protective equipment can be protective gloves, a protective suit, a respiratory protective device, or a protective boot for protecting the user in the hazardous environment.

The identification element comprises information for the reader to read and to identify the personal protective equipment and its related use history, whereby a use time of the personal protective equipment in the hazardous environment is calculated, and the use history is recorded as well.

In an embodiment of the present invention, the personal protective equipment communicates with a host via the reader, and the information of the identification element comprises an individual equipment data of the personal protective equipment and an accumulated time data used for the personal protective equipment; the reader further transmits a start time data and an end time data to the host, whereby the host calculates the use time of the personal protective equipment in the hazardous environment. The identification element can be a Radio Frequency Identification (RFID) device, barcode, or the like.

In another embodiment of the present invention, the identification element is a Radio Frequency Identification (RFID) device and comprises a memory, a processor (such as an IC chip processor) and an antenna module, wherein the processor is electrically coupled with the memory and the antenna module. The memory stores the information for processing by the processor; and the processor can also receive a signal from the reader. In this embodiment, the antenna module enables the processor to transmit the information in the memory to the reader according to the signal of the reader.

Furthermore, in addition to the individual equipment data of the personal protective equipment, the information further comprises an accumulated use time data for an information system to calculate the use time of the personal protective equipment in the hazardous environment. The memory can be a read-only memory for recording the individual equipment data of the personal protective equipment for the reader to identify the personal protective equipment, wherein the reader or the host can record the accumulated use time and the use history of the personal protective equipment. Alternatively, the memory can also be a rewritable memory for the reader or the host to analyze the accumulated use time and the use history of the personal protective equipment in the hazardous environment and to write the information therein. Moreover, the RFID device comprises the processor for analyzing and recording the individual equipment data, the accumulated use time and the use history of the personal protective equipment in the hazardous environment. The antenna module can transmit the processed information to the reader and the host according to the signal from the reader. Based on different kinds of RFID devices, there can be different embodiments; however, all of them can achieve the object of the present invention.

Besides, another aspect of the present invention is to provide a managing system for managing a use time of a personal protective equipment for providing a user necessary protection in a hazardous environment. The managing system comprises a reader and a personal protective equipment having an identification element. As described above, the personal protective equipment communicates with the reader to calculate the use time of the personal protective equipment in the hazardous environment.

Furthermore, it is still another object of the present invention to provide a managing system for managing a use time of a personal protective equipment, which comprises the personal protective equipment having an identification element, the managing system also comprises a reader and a host. In this embodiment, the host analyzes and evaluates the current condition of the personal protective equipment according to the accumulated use time and individual equipment data, and also according to the user defined parameters and environmental parameters, then the host can issue an alert indicating that the personal protective equipment has reached its safety limit or the personal protective equipment should be replaced immediately in order to maintain the effectiveness of the personal protective equipment.

In short, the accumulated use time of the personal protective equipment can be generated by the RFID device of the personal protective equipment spontaneously, or it is generated by the reader using the information read by the reader, or it is generated by the host processing the received information.

All claims are incorporated in the description by reference.

### BRIEF DESCRIPTION OF THE DRAWINGS

FIG.1 illustrates a perspective view of a managing system for managing a use time of a personal protective equipment according to the present invention;
FIG.2 shows a user wearing many kinds of main body of the personal protective equipment according to the present invention;
FIG.3 illustrates a block diagram of the identification element according to the present invention; and
FIG.4 illustrates another one of embodiments of the managing system for managing a use time of a personal protective equipment according to the present invention.

### DETAILED DESCRIPTION OF THE PREFERRED EMBODIMENT

In order to explain the above and other objects, features and advantages of the present invention, various embodiments along with accompanying drawings are described as follows.

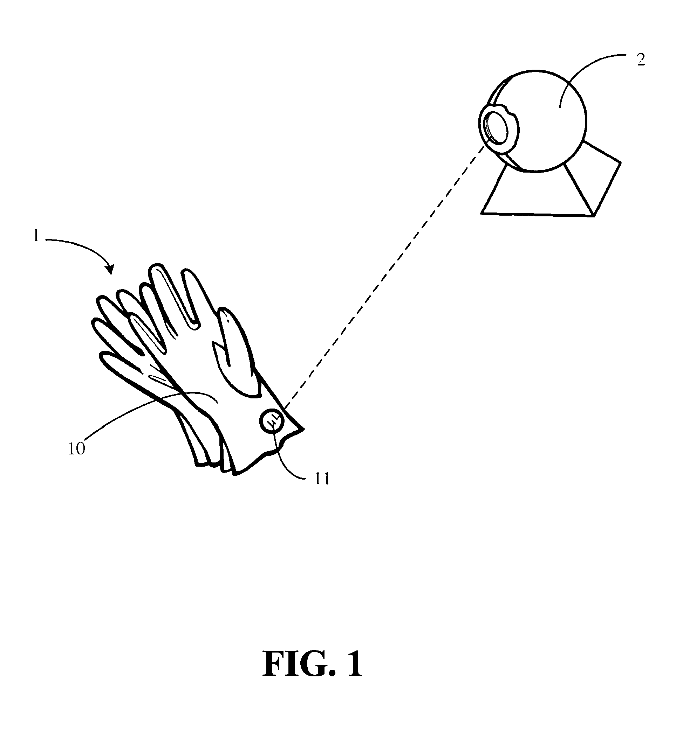

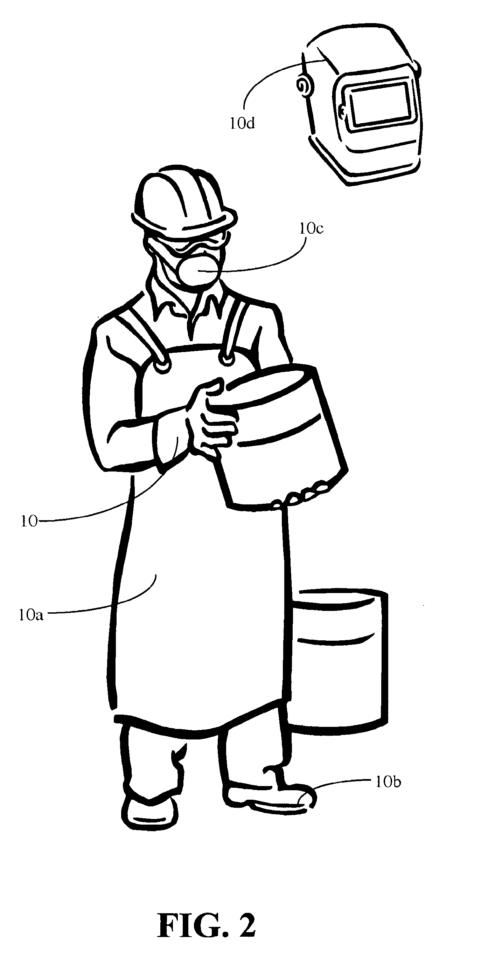

Please refer to FIG.1 for an embodiment of a personal protective equipment 1, which is **characterized in that** the personal protective equipment 1 can communicate with a reader 2. The personal protective equipment 1 comprises a main body 10 and an identification element 11. Although the main body in this figure is illustrated as a pair of gloves 10, it is not intended to limit the present invention. As shown in FIG.2, the main body of the personal protective equipment 1 can be protective gloves 10, a protective suit 10a, a respiratory protective device 10c, a protective helmet 10d or protective boots 10b to provide the user necessary protection in the hazardous environment (such as working with the chemical tank or the poisonous gas). For the sake of convenience, the gloves 10 (or can be only one glove 10) will be used as an example to illustrate the present invention (hereinafter as the main body 10), however, it is not intended to limit the present invention.

Please refer back to FIG.1, the identification element 11 is disposed on the main body 10, and the identification element 11 comprises information (such as basic specification of the protective equipment, user information, the material used in the main body 10 and so on), which is read by the reader 2 to identify the personal protective equipment 1. For example, the identification element 11 can be a Radio frequency Identification (RFID) device. When the user puts on the personal protective equipment 1 and wants to enter or is in a hazardous environment, as long as he/she passes through or is in the communication range of the reader 2, the use time of the personal protective equipment 1 in the hazardous environment can be calculated or accumulated through the communication between the identification element 11 on the main body 10 and the reader 2.

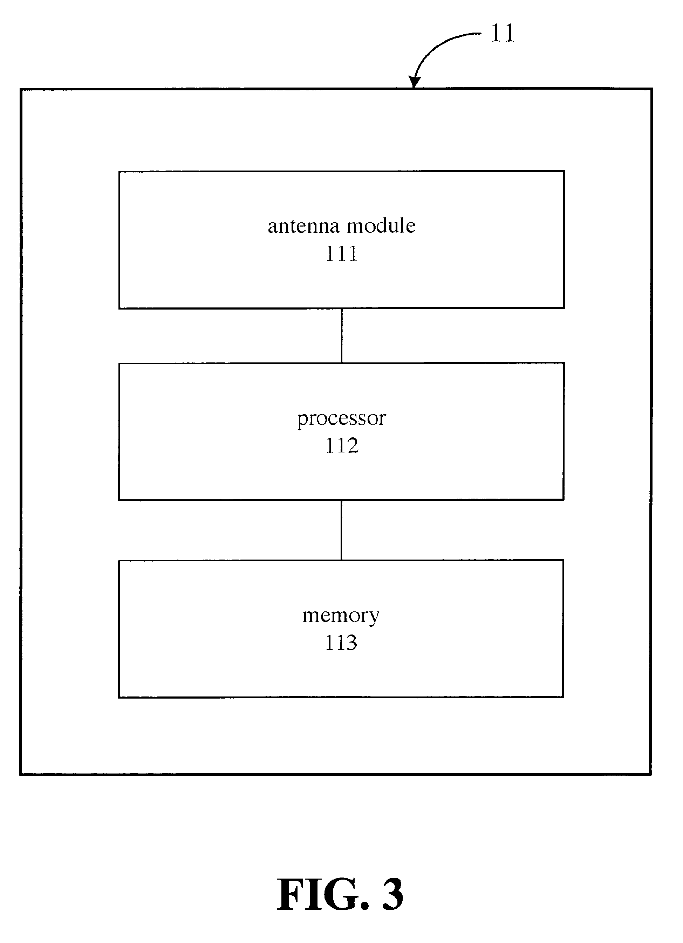

Please refer to FIG.3. In this embodiment, the identification element 11 is a RFID device, which further comprises a memory 113, a processor 112, and an antenna module 111, wherein the processor 112 is electrically coupled with the memory 113 and the antenna module 111. The memory 113 stores the information for processing by the processor 112, and the processor 112 can also receive a signal from the reader 2. For example, the reader 2 can emit a radio wave to generate alternating magnetic field to enable the antenna module 111 and the processor 112 to operate accordingly, thus to enable the processor 112 to send the information in the memory 113 to the reader 2. Since the operation of RFID and related functions are well known, there will not be further described for the sake of brevity.

In this embodiment, the antenna module 111 operates according to the signal from the reader 2, whereby the processor 112 enables the memory 113 to record the use time of the personal protective equipment 1 in the hazardous environment. Furthermore, the information further comprises an accumulated time data (for example, the RFID tag can have a timer capability) for the processor 112 to calculate the use time of the personal protective equipment 1 in the hazardous environment, then the antenna module 111 transmits the processed information (for example, available time data) to reader 2 according to the signal from the reader 2.

The memory 113 can be a read-only memory for recording the individual equipment data of the personal protective equipment 1, which is intended for the reader 2 to identify the personal protective equipment 1, wherein the reader 2 or the host 3 (as shown in FIG.3) can record the accumulated use time and the use history of the personal protective equipment 1. Alternatively the memory 113 can also be a rewritable memory for the reader 2 or the host 3 to analyze the accumulated use time and the use history of the personal protective equipment 1 in the hazardous environment and to write the information therein. Moreover, the RFID device 11 comprises the processor 112 for analyzing and recording the individual equipment data, the accumulated use time, and the use history of the personal protective equipment 1 in the hazardous environment. The antenna module 111 can transmit the processed information to the reader 2 and the host 3 according to the signal from the reader 2. Based on different kinds of RFID devices, there can be different embodiments; however, any of them can achieve the objects of the present invention.

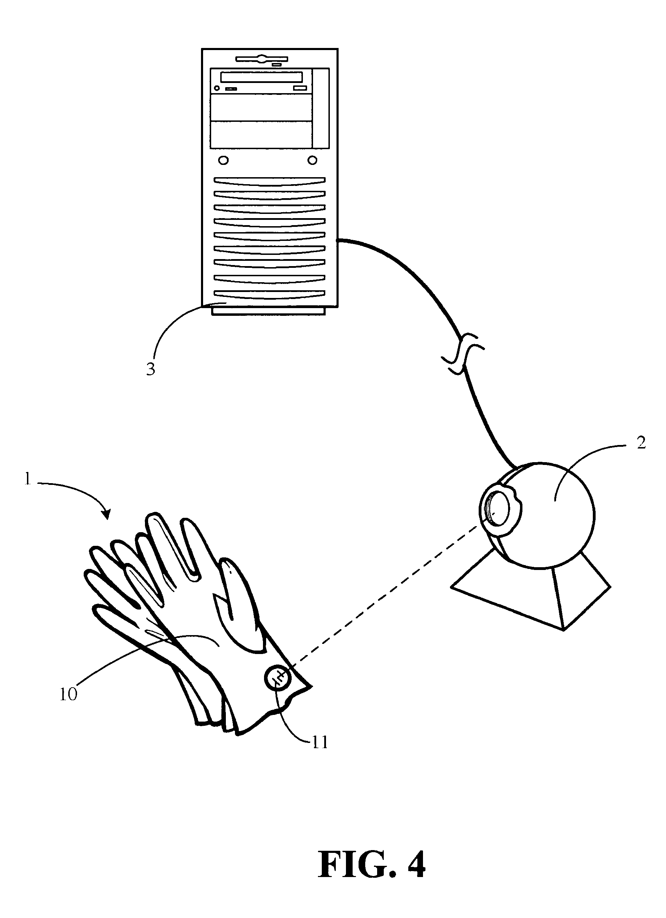

Please refer to FIG.4, in another embodiment of the present invention, the personal protective equipment 1 can communicate with a host 3 via the reader 2, and transmits the information to the host 3 through the reader 2 for the host 3 to calculate the accumulated use time of the personal protective equipment 1 in the hazardous environment. If the identification element 11 does not transmit the information spontaneously, for example, the identification element 11 can be a barcode sticker, an identification chip storing user data, or the like. By way of example the identification element 11 may passively provide the information (for example, the barcode information) for the reader 2 to read, and then the reader 2 transmits the information to the host, thereby the host 3 calculates the accumulated use time of the personal protective equipment 1 in the hazardous environment, and gathers the individual equipment data of the personal protective equipment 1. Afterwards the host 3 can analyze and evaluate the current condition of the personal protective equipment 1 according to the accumulated use time and individual equipment data, and also according to the user defined parameters and environmental parameters, then the host 3 can issue an alert indicating that the personal protective equipment 1 has reached its safety limit or the personal protective equipment 1 should be replaced immediately in order to maintain the effectiveness of the personal protective equipment 1.

In this embodiment, a barcode or passive RFID device is provided for illustrating the present invention and it is not intended to limit the present invention; the identification element 11 can be an active RFID device which actively transmits the information to the reader 2, and then the reader 2 further transmits the information to the host 3.

Moreover, the information provided by the identification element 11 comprises user data and the material of the main body 10, therefore it is able to set environmental parameters at the host 3 for calculating the accumulated use time. The allowable use time varies due to the material of the main body 10 and/or different environmental parameters so as to let the user know when to replace (or change), to clean or even renew his/her personal protective equipment 1 in order to maintain effective protection for the user in the hazardous environment.

Hence, another aspect of the present invention is to provide a managing system for managing a use time of a personal protective equipment, wherein the managing system comprises the personal protective equipment 1 and a reader 2. As described above, the personal protective equipment 1 communicates with the reader 2 to enable the managing system to calculate the use time of the personal protective equipment 1 in the hazardous environment. Then the user can determine when to replace (change), to clean or even to renew his/her personal protective equipment 1 to maintain effective protection.

Furthermore, it is still another object of the present invention to provide a managing system for managing a use time of a personal protective equipment, wherein the managing system comprises the personal protective equipment 1, a reader 2 and a host 3. In this embodiment, the host 3 can analyze and evaluate the current condition of the personal protective equipment 1 according to the accumulated use time and individual equipment data, and also the user defined parameters and environmental parameters, then the host 3 can issue an alert in order to maintain the effectiveness of the personal protective equipment 1. The alert can be an alarming sound or a SMS/MMS message, or the like. However, since the present invention focuses on how to calculate the accumulated use time of the personal protective equipment 1 by using the communication between the identification element 11 and the reader 2, it will not be further described as to how to generate the alert for the sake of brevity.

To sum up, the present invention discloses a personal protective equipment and its managing system in which the identification element 11 can be a passive or active read-only RFID tag (for example, there's only a serial number or 2D barcode on it) for the reader 2 to read. In this embodiment, the reader 2 can identify the personal protective equipment 1 and calculate the accumulated use time of the personal protective equipment 1.

In further another embodiment of the present invention, the identification element 11 can be a passive or active read-only RFID tag (for example, there's only a serial number or 2D barcode on it) for the reader 2 to read. In this embodiment, the reader 2 can read the information and send it to the host 3 for identifying the personal protective equipment 1 and calculating the accumulated use time of the personal protective equipment 1.

In another embodiment of the present invention, the identification element 11 can be a passive or active rewritable RFID tag (for example, it contains a serial number and accumulated time data or performance data) for the reader 2 to read. In this embodiment, the reader 2 identifies the use time of the personal protective equipment 1 and calculates the performance/allowable use time of the personal protective equipment 1, and writes the accumulated time data or performance data back to the RFID tag for storing the information therein.

In still another embodiment of the present invention, the identification element 11 can be a passive or active rewritable RFID tag (for example, it contains serial number and accumulated time data or performance data) for the reader 2 to read. In this embodiment, the reader 2 reads the information from the identification element 11 and sends it to the host 3. The host 3 calculates the accumulated use time and determines the performance of the personal protective equipment 1, and then the host 3 writes the accumulated time data or performance data back to the RFID tag for storing the information therein.

For a further embodiment, the identification element 11 can be an active read-only RFID tag (for example, it contains only the serial number) which can accumulate the use time of the personal protective equipment 1, the identification element 11 is activated by the reader 2 to start time counting, thus the reader 2 or the host 3 can receive the accumulated time data from the identification element 11 to calculate the performance and to determine the performance of the personal protective equipment 1.

Other embodiment includes that the identification element 11 can be an active rewritable RFID tag (for example, it contains a serial number and accumulated time data or performance data), the identification element 11 is activated by the reader 2 to start time counting, thus the reader 2 or the host 3 can receive the accumulated time data from the identification element 11 to calculate the performance and to determine the performance of the personal protective equipment 1, and then to write the accumulated time data or performance data back to the RFID tag.

In short, the accumulated use time of the personal protective equipment 1 can be generated by the identification element 11 (for example, RFID device) of the personal protective equipment 1 spontaneously, or it can be generated by the reader 2 using the information read by the reader 2, or it is generated by the host 3 processing the information sent from the reader 2. Besides, the host 3 can control and set up related information, such as the environmental parameters, performance parameters of the identification element 11 to more accurately calculate the use time of the personal protective equipment 1 in the hazardous environment.

Many changes and modifications in the above described embodiment of the invention can, of course, be carried out without departing from the scope thereof. Accordingly, to promote the progress in science and the useful arts, the invention is disclosed and is intended to be limited only by the scope of the appended claims.

## Claims

1. A personal protective equipment for providing a user necessary protection in a hazardous environment, which is **characterized in that** the personal protective equipment can communicate with a reader, the personal protective equipment comprising:
a main body; and
an identification element disposed on the main body, the identification element comprising information for the reader to read and to identify the personal protective equipment, whereby a use time of the personal protective equipment in the hazardous environment is calculated.

2. The personal protective equipment of Claim 1, wherein the main body can be a protective glove, a protective suit, a respiratory protective device or a protective boot for protecting the user thereof in the hazardous environment.

3. The personal protective equipment of Claim 1 or 2, wherein the identification element is a Radio Frequency Identification (RFID) device and can receive a signal from the reader, the identification element comprises:
a memory for storing the information;
a processor electrically coupled with the memory for processing the information; and
an antenna module for being electrically coupled with the processor and generating a response signal according to the signal of the reader, whereby the processor lets the reader calculate the use time of the personal protective equipment in the hazardous environment.

4. The personal protective equipment of Claim 3, wherein the antenna module transmits the processed information to the reader according to the signal from the reader.

5. The personal protective equipment of Claim 3 or 4, wherein the information comprises an accumulated time for calculating the use time of the personal protective equipment in the hazardous environment.

6. The personal protective equipment of Claim 5, wherein the memory comprises a rewritable memory for recording the accumulated time of the personal protective equipment in the hazardous environment.

7. The personal protective equipment according to any of the preceding claims, wherein the personal protective equipment communicates with a host via the reader, and the information comprises a start time data and an end time data, the reader further transmits the start time data and the end time data to the host to calculate the use time of the personal protective equipment in the hazardous environment.

8. A managing system for managing a use time of a personal protective equipment for providing a user necessary protection in a hazardous environment, the managing system comprising:
the personal protective equipment comprising a main body and an identification element, wherein the identification element is disposed on the main body and comprises information; and
a reader for reading the information of the identification element of the personal protective equipment to identify the personal protective equipment and to communicate with the identification element for calculating the use time of the personal protective equipment in the hazardous environment.

9. The managing system of Claim 8, wherein the main body can be a protective glove, a protective suit, a respiratory protective device or a protective boot for protecting the user thereof in the hazardous environment.

10. The managing system of Claim 8 or 9, wherein the identification element is a Radio Frequency Identification (RFID) device and can receive a signal from the reader, the identification element comprises:
a memory for storing the information;
a processor electrically coupled with the memory for processing the information; and
an antenna module for being electrically coupled with the processor and generating a response signal according to the signal of the reader, whereby the processor lets the reader calculate the use time of the personal protective equipment in the hazardous environment.

11. The managing system of Claim 10, wherein the antenna module transmits the processed information to the reader according to the signal from the reader.

12. The managing system of Claim 10 or 11, wherein the information comprises an accumulated time for calculating the use time of the personal protective equipment in the hazardous environment.

13. The managing system of Claim 12, wherein the memory is a rewritable memory for recording the accumulated time of the personal protective equipment in the hazardous environment.

14. The managing system of according to any of the claims 8 to 13 further comprising a host, wherein the personal protective equipment communicates with the host via the reader, and the information comprises a start time data and an end time data, the reader further transmits the start time data and the end time data to the host to calculate the use time of the personal protective equipment in the hazardous environment.

15. A managing system for managing a use time of a personal protective equipment for providing a user necessary protection in a hazardous environment, the managing system comprising:
the personal protective equipment comprising a main body and an identification element, wherein the identification element is disposed on the main body and comprises information;
a reader for reading the information of the identification element of the personal protective equipment to identify the personal protective equipment; and
a host, wherein the reader transmit the information to the host for calculating the use time of the personal protective equipment in the hazardous environment.
